Europäisches Patentamt

European Patent Office

Office européen des brevets

(19)

(11) Numéro de publication : **0 331 540 B1**

(12) **FASCICULE DE BREVET EUROPEEN**

(45) Date de publication du fascicule du brevet :
22.04.92 Bulletin 92/17

(51) Int. Cl.⁵ : **B60K 11/04**

(21) Numéro de dépôt : **89400285.6**

(22) Date de dépôt : **01.02.89**

(54) **Dispositif de fixation pour le montage d'un radiateur de véhicule automobile.**

(30) Priorité : **03.03.88 FR 8802719**

(43) Date de publication de la demande :
**06.09.89 Bulletin 89/36**

(45) Mention de la délivrance du brevet :
**22.04.92 Bulletin 92/17**

(84) Etats contractants désignés :
**DE GB IT**

(56) Documents cités :
**EP-A- 0 226 914**
**DE-A- 2 634 990**
**GB-A- 923 703**
**GB-A- 2 174 655**
**US-A- 4 541 645**
**Prof.K.Rathmill, International Trends in Manu-**
**facturing Technology: Robotic Assenbly, 1985,**
**IFS (Publications) Ltd, UK.**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Gréaud , Jean-Louis**
**29, rue Georges Guynemer**
**78300 Poissy (FR)**

(74) Mandataire : **Kohn, Philippe et al**
**c/o CABINET LAVOIX 2, place d'Estienne**
**d'Orves**
**F-75441 Paris Cédex 09 (FR)**

## Description

La présente invention a pour objet un dispositif de fixation d'un radiateur sur la caisse d'un véhicule automobile.

On connaît différents procédés et dispositifs de fixation d'un radiateur de véhicule automobile disposés verticalement et transversalement, par exemple à l'avant du véhicule.

Le document GB-A-923 703 décrit et représente un dispositif de fixation d'un radiateur par des moyens d'attache supérieurs et inférieurs en forme de U dont les branches s'étendent dans des plans parallèles à celui du radiateur. Ce type de fixation nécessite de nombreuses manipulations et interventions selon des directions différentes pour y introduire le corps du radiateur et comprimer élastiquement les éléments en matériau élastomère faisant fonction d'amortisseurs des vibrations.

Le document DE-A-26 34 990 décrit et représente un agencement de fixation d'un radiateur conforme au préambule de la revendication 1. La fixation s'effectue au moyen de deux broches s'étendant verticalement depuis sa face latérale inférieure pour être reçues dans deux blocs en matériau élastomère correspondants, et d'une troisième broche s'étendant perpendiculairement au plan du radiateur, depuis sa face arrière, et reçue dans un bloc en matériau élastomère, la fixation étant complétée par une pince élastique coopérant avec le bord latéral supérieur avant du radiateur.

Le docuent US-A-4.541.645 décrit et représente un agencement de fixation comportant deux broches agencées sur la face latérale supérieure du radiateur et s'étendant horizontalement dans le plan du radiateur, ainsi qu'une broche inférieure s'étendant dans la même direction, les broches supérieures faisant office d'axe de pivotement pour le montage, et la broche inférieure s'accrochant dans une chape élastique.

Les agencements de fixation qui viennent d'être décrits, bien que permettant d'assurer une fixation fiable du radiateur ainsi qu'un amortissement correct des vibrations, nécessitent de nombreuses opérations lors du montage qui sont dirigées dans des directions variées dans lesquelles il est nécessaire de produire des efforts de montage.

Le document International Trends in Manufacturing Technology : ROBOTIC ASSEMBLY par K.RATHMILL, 1985, IFS (Publications) Ltd, UK propose un procédé de montage et un agencement de fixation qui permettent de réaliser le montage d'un organe plan sur une structure selon une direction unique qui comporte une étape de mise en place par translation de l'organe selon une direction perpendiculaire au plan de l'organe, une étape de fixation par engagement, selon ladite direction, de moyens formant pêne dans des moyens formant gâche, au cours de laquelle on engage simultanément plusieurs moyens formant pênes dans des moyens correspondants formant gâches au cours de l'étape de fixation, et une étape finale d'immobilisation du radiateur par vissage selon ladite direction de translation.

Ce procédé de montage et de fixation selon une direction unique est particulièrement avantageux en ce qu'il permet une automatisation des opérations notamment à l'aide d'un robot de montage.

L'invention propose un dispositif de fixation d'un radiateur sur la caisse d'un véhicule automobile, comprenant des moyens d'attache qui relient à celle-ci deux bords opposés du radiateur, au moins un de ces moyens d'attache comportant un pêne, caractérisé en ce que le pêne (22) comporte une semelle plane dont une face principale et deux faces latérales de guidage sont reçues en coulissement selon une direction perpendiculaire au plan du radiateur dans un logement d'une gâche comportant des surfaces complémentaires de guidage du pêne, et en ce que ledit moyen d'attache comporte un élément de verrouillage déformable élastiquement qui est reçu dans une encoche formée dans une face de la semelle plane opposée à ladite face principale, afin de premettre la mise en place et la fiwation du radiateur par translation de ce dernier selon la direction de coulissement du pêne.

Selon d'autre caractéristiques préférables de l'invention :

– l'élément de verrouillage comprend au moins une lame élastique fixée à la gâche par l'une de ses extrémités et comportant une portion recourbée de profil complémentaire de celui de l'encoche et dont la convexité est tournée en direction de cette dernière ;

– le pêne comporte une patte de liaison faisant saillie verticalement depuis la face supérieure de la semelle et en ce que la gâche comporte une fente correspondante permettant le passage de la patte de liaison lors de la mise en place ;

– le pêne est fixé au radiateur et la gâche à la caisse du véhicule ;

– la gâche est fixée à la caisse avec interposition de moyens d'amortissement des vibrations ; et

– le dispositif comporte deux paires de pênes fixées respectivement sur deux faces latérales opposées du radiateur et deux paires de gâches correspondantes.

D'autres caractéristiques et avantages de l'invention apparaîtront à la lecture de la description détaillée qui va suivre pour la compréhension de laquelle on se reportera aux dessins annexés dans lesquels :

– la figure 1 est une vue latérale illustrant de manière schématique l'étape d'approche pour la mise en place d'un radiateur employant un dispositif de fixation conforme aux enseignements de l'invention ;

– la figure 2 est une vue latérale similaire à celle de la figure 1 illustrant le radiateur à l'issue de l'opération de mise en place ;

– la figure 3 est une vue de face, depuis l'avant du véhicule, du radiateur de la figure 2 ;

– les figures 4, 5 et 6 sont des vues similaires à celles des figures 1, 2 et 3 et qui représentent une variante du dispositif de fixation du radiateur sur la caisse du véhicule ;

– la figure 7 est une vue en coupe longitudinale selon la ligne 7-7 de la figure 10 d'un ensemble péne et gâche en position verrouillée ;

– la figure 8 est une vue selon la flèche F1 de la figure 7 ;

– la figure 9 est une vue en coupe selon la ligne 9-9 de la figure 7 ;

– la figure 10 est une vue de dessus selon la flèche F2 de la figure 7 ; et

– la figure 11 est une vue partielle en perspective montrant la coopération de l'élément formant pêne avec la lame élastique des moyens formant gâche.

Le dispositif de fixation selon l'invention a pour but de permettre le montage d'un radiateur 10 de refroidissement d'un moteur à combustion interne équipant un véhicule automobile dont on a représenté une partie de la caisse 12.

La caisse 12 comporte notamment une traverse horizontale inférieure 14 des montants latéraux 16 et une traverse supérieure 18.

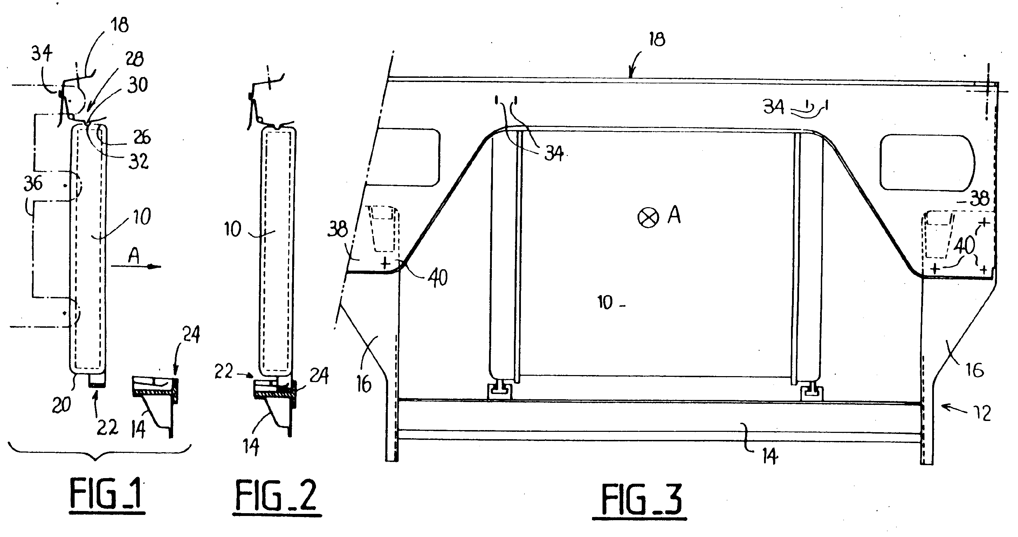

L'invention a pour but de permettre la mise en place et la fixation du radiateur 10 par translation selon la flèche A de la figure 1, c'est-à-dire selon une direction sensiblement perpendiculaire au plan général du radiateur 10.

Conformément au premier mode de réalisation représenté aux figures 1 à 3, la face latérale inférieure 20 du radiateur 10 est munie de deux éléments formant pênes 22 qui sont prévus pour être reçus dans deux éléments correspondants formant gâches 24 fixées à la traverse inférieure 14.

Selon ce mode de réalisation, la face latérale supérieure 26 du radiateur 10 est, préalablement à sa mise en place sur la caisse du véhicule, reliée à la traverse supérieure 18. Cette liaison est assurée par deux ressorts 28 ayant chacun une portion recourbée 30 qui est reçue dans une gorge correspondante 32 de la face supérieure 26. L'autre extrémité de chacun des ressorts 28 est constituée par deux pattes 34 reçues dans des fentes correspondantes de la traverse supérieure 18.

Comme on peut le constater à la figure 1, l'ensemble constitué par le radiateur 10 muni de ses pênes 22 et de la traverse supérieure 18, est maintenu par une tête de préhension 36 reliée par exemple au bras d'un robot de montage.

La mise en place et la fixation du radiateur s'effectuent de la manière suivante :

En partant de la position représentée à la figure 1, on déplace l'ensemble constitué par le radiateur 10 et la traverse 18 en translation selon la direction A jusqu'à ce que, d'une part, les pênes 22 s'engagent et se verrouillent dans les gâches 24 et que, d'autre part, les deux portions latérales inférieures 38 de la traverse supérieure 18 viennent en appui contre les portions en vis-à-vis des bras latéraux 16 de la caisse 12 du véhicule.

Dans la position ainsi atteinte, représentée aux figures 2 et 3, le radiateur 10 occupe sa position finale par rapport à la caisse 12 du véhicule et il ne reste plus qu'à assurer son immobilisation par une opération de vissage de la traverse supérieure 18 sur les bras latéraux 16 au moyen de vis de fixation 10 représentées de manière symbolique à la figure 3.

On constate que l'opération de vissage est accomplie selon la même direction A que l'opération d'approche et de mise en place du radiateur, par exemple au moyen d'un robot de vissage.

Selon ce mode de réalisation les ressorts 28 assurant la fixation de la face latérale supérieure 26 du radiateur 10 par rapport à la traverse supérieure 18 permettent de compenser les tolérances de fabrication des différents composants lors de l'opération d'immobilisation au moyen des vis 40. Ils participent également à l'amortissement de la transmission des vibrations entre la caisse 12 et le radiateur 10.

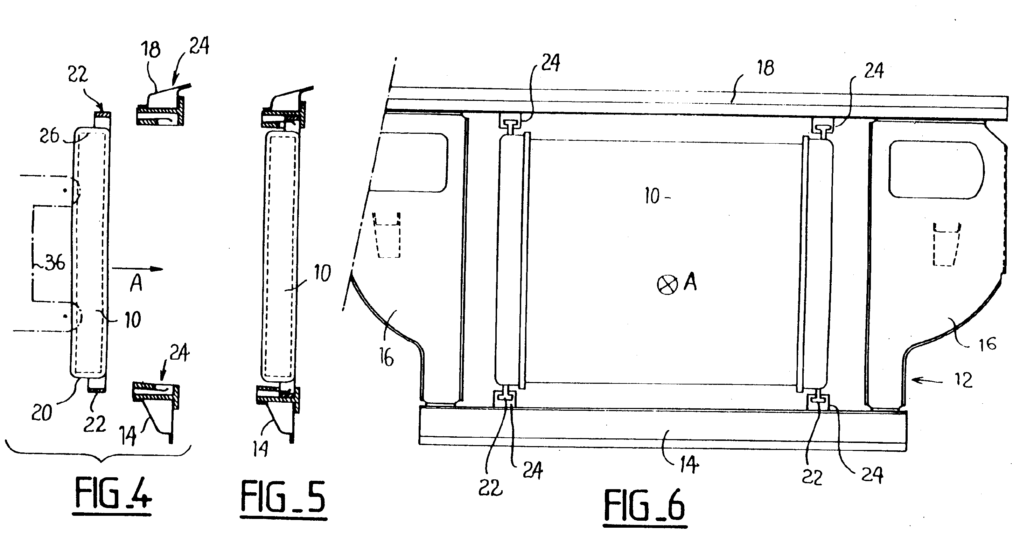

Dans le second mode de réalisation représenté aux figures 4 à 6, la traverse supérieure 18 fait partie intégrante de la caisse 12 du véhicule et la fixation du radiateur s'effectue au moyen de deux paires de pênes 22, fixées respectivement sur les deux faces latérales inférieure 20, et supérieure 26, du radiateur 10 qui sont reçus dans deux paires de gâches correspondantes fixées respectivement à la traverse inférieure 14 et à la traverse supérieure 18 de la caisse 12.

L'agencement de fixation représenté aux figures 4 à 6 ne nécessite pas d'opération finale d'immobilisation par vissage puisque la traverse supérieure 18 est une partie intégrante de la caisse 12 aux bras latéraux 16 de laquelle elle a préalablement été fixée.

Comme dans le mode de réalisation représenté aux figures 1 à 3, l'opération de mise en place et de fixation du radiateur 10 s'effectuent, par exemple au moyen d'une tête de préhension 36 de robot, par translation du radiateur selon la direction indiquée par la flèche A jusqu'à ce que les éléments formant pênes 22 s'engagent et s'encliquètent dans les gâches 24, ces derniers assurant la fixation et l'immobilisation du radiateur 10 par rapport à la caisse 12 du véhicule.

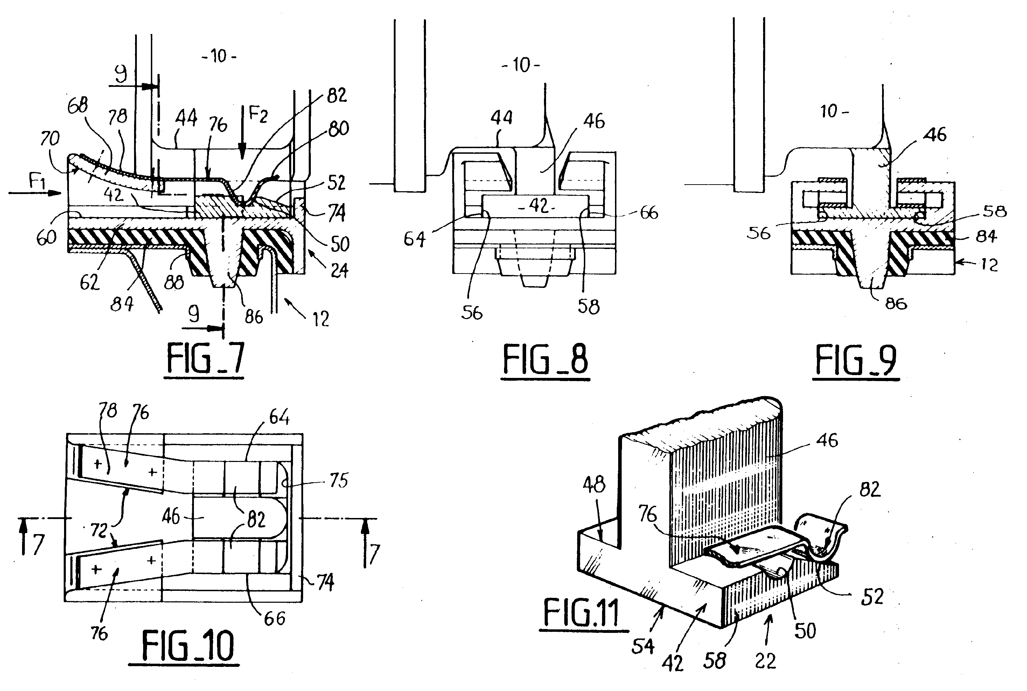

On décrira maintenant, en se référant aux figures 7 à 11, un mode de réalisation d'un ensemble pêne-gâche particulièrement adapté aux procédés de mise en place et de fixation d'un radiateur tels qu'ils ont été décrits en référence aux figures 1 à 6.

L'élément formant pêne 22 est pour l'essentiel constitué d'une semelle parallélépipédique 42 qui est reliée à une face latérale 44 d'un radiateur 10 par une patte de fixation 46 s'étendant parallèlement à la direction longitudinale d'introduction de la semelle 42 et qui s'étend depuis la face supérieure 48 de la semelle 42.

La patte de fixation 46 partage la face supérieure 48 en deux portions identiques et symétriques. Chacune des portions de la face supérieure 48 comporte une encoche 50 de profil semi-cylindrique concave qui s'étend selon une direction transversale perpendiculaire à la direction longitudinale de la semelle. La partie avant 52 de chacune des portions de face supérieure présente un profil en forme de rampe inclinée vers la face inférieure 54 de la semelle 42.

La semelle 42 comporte enfin deux faces latérales de guidage 56 et 58 qui s'étendent dans un plan vertical parallèlement à la direction longitudinale de la semelle.

L'élément formant gâche 24 est un élément en forme de boîtier essentiellement ouvert à l'une de ses extrémités (à gauche en considérant les figures 7 et 10) de manière à permettre l'introduction de l'élément formant pêne 22.

La face supérieure plane 60 de la paroi inférieure 62 du boîtier de la gâche 24 coopère avec la face inférieure 54 du pêne 22 pour en assurer le guidage. De la même manière le boîtier de la gâche 24 comporte deux surfaces latérales de guidage parallèles et opposées 64 et 66 qui coopèrent avec les faces de guidage, 56 et 58 respectivement, de la semelle 42.

La paroi supérieure 68 du boîtier de la gâche 24 présente un profil d'entrée évasé 70 facilitant l'introduction et le guidage préalable du pêne 22, ainsi qu'une fente longitudinale 72, elle-même évasée, permettant le passage de la patte de fixation 46 du pêne 22.

L'extrémité opposée, à droite en considérant les figures 7 et 10, de la gâche 24 comporte une surface transversale de butée 74 qui est susceptible de coopérer avec le bord avant 75 du pêne 22 pour déterminer la position longitudinale maximale d'enclenchement à l'intérieur de la gâche 24.

La gâche 24 comporte deux lames élastiques symétriques 76 qui assurent le verrouillage élastique en position du pêne 22 dans la gâche 24.

Chaque lame 76 est fixée par son extrémité arrière 78 à la paroi supérieure 68 de la gâche et s'étend dans un plan sensiblement horizontal parallèlement à la paroi inférieure 62.

Au voisinage de son extrémité libre 80, chaque lame élastique comporte une portion recourbée 82 de profil semi-cylindrique complémentaire de celui des encoches 50 du pêne 22 et dont la convexité est tournée vers le bas c'est-à-dire en direction des encoches 50.

L'ensemble pêne-gâche qui vient d'être décrit fonctionne de la manière suivant :

Lors du mouvement d'approche visant à la mise en place d'un radiateur 10, la portion avant de chaque pêne 22 pénètre dans la partie évasée du boîtier de la gâche 24 et est guidée à l'intérieur de ce dernier grâce à la coopération des surfaces de guidage 54, 56 et 58 avec les surfaces de guidage correspondantes 60, 64 et 66. Cette introduction selon la direction longitudinale F1 se poursuit jusqu'à ce que les portions recourbées 82 des lames 76 viennent en coopération avec les rampes 52 du pêne 22 comme cela est représenté à la figure 11.

L'effort appliqué au radiateur 10 et donc au pêne 22 selon la direction longitudinale provoque l'effacement élastique des lames 76 jusqu'à ce que le pêne vienne en butée contre la paroi transversale 74 et que les portions recourbées 82 tombent dans les encoches correspondantes 50. Dans cette position représentée aux figures 7 à 10, le pêne 22 est ainsi immobilisé en translation longitudinale par rapport à la gâche 24.

Afin d'assurer un bon amortissement des vibrations entre le radiateur 10 et la caisse du véhicule, la paroi inférieure 62 de la gâche 24 est montée par rapport à la caisse 12 avec interposition d'une lame en matériau élastomère 84. L'immobilisation de la face inférieure 62 par rapport à la caisse 12 est assurée au moyen d'un pivot vertical 86 qui pénètre dans un orifice correspondant 88 de la caisse 12 avec interposition du matériau élastomère.

## Revendications

1. Dispositif de fixation d'un radiateur (10) sur la caisse (12) d'un véhicule automobile, comprenant des moyens d'attache qui relient à celle-ci deux bords opposés (20, 26) du radiateur, au moins un de ces moyens d'attache comportant un pêne (22), caractérisé en ce que le pêne (22) comporte une semelle plane (42) dont une face principale (54) et deux faces latérales (56, 58) de guidage sont reçues en coulissement selon une direction (A) perpendiculaire au plan du radiateur dans un logement d'un gâche (24) comportant de surface complémentaire (60, 64, 66) de guidage du pêne, et en ce que ledit moyen d'attache comporte un élément de verrouillage (76) déformable élastiquement qui est reçu dans une encoche (50) formée dans une face (48) de la semelle plane (42) opposée à ladite face principale (54), afin de permettre la mise en place et la fixation du radiateur par translation de ce dernier selon la direction (A) de coulissement du pêne.

2. Dispositif de fixation selon la revendication 1, caractérisé en ce que l'élément de verrouillage comprend au moins une lame élastique (76) fixée à la gâche par l'une de ses extrémités (78) et comportant une portion recourbée (82) de profil complémentaire de celui de l'encoche (50) et dont la convexité est tournée en direction de cette dernière.

3. Dispositif de fixation selon l'une des revendications 1 ou 2, caractérisé en ce que le pêne (22) comporte une patte de liaison (46) faisant saillie verticalement depuis la face supérieure (48) de la semelle (42) en ce que la gâche (24) comporte une fente correspondante (72) permettant le passage de la patte de liaison (46) lors de la mise en place.

4. Dispositif de fixation selonh l'une quelconque des revendications 1 à 3, caractérisé en ce que le pêne (22) est fixé au radiateur (10) et la gâche (24) à la caisse (12) du véhicule.

5. Dispositif de fixation selon la revendication 4, caractérisé ejn ce que la gâche (24) est fixée à la caisse (12) avec interposition de moyens d'amortissement (84) des vibrations.

6. Dispositif de fixation selon l'une quelconque des revendications 1 à 5, caractérisé en ce qu'il comporte deux paires de pêne (22) fixées respectivement sur deux faces latérales opposées du radiateur et deux paires de gâches (24) correspondantes.

## Patentansprüche

1. Vorrichtung zur Befestigung eines Kühlers (10) an der Karosserie (12) eines Kraftfahrzeugs, mit Anbringungsmitteln, welche mit dieser zwei gegenüberliegende Ränder (20, 26) des Kühlers verbinden, wobei wenigstens eines dieser Anbringungsmittel einen Riegel (22) aufweist, dadurch gekennzeichnet, daß der Riegel (22) eine ebene Fußplatte (42) aufweist, bei der eine Hauptfläche (54) und zwei seitliche Führungsflächen (56, 58) in einer zur Kühlerebene senkrechten Richtung (A) gleitend in einer Aufnahme eines Schließteils (24) aufgenommen sind, welches komplementäre Führungsflächen (60, 64, 66) für den Riegel aufweist, und daß die Anbringungsmittel ein elastisch verformbares Verriegelungselement (76) aufweisen, welches in einer Raste (50) aufgenommen ist, die in einer der Hauptfläche (54) gegenüberliegenden Fläche (48) der ebenen Fußplatte (42) zur Ermöglichung des Instellungbringens und der Festlegung des Kühlers durch Verschieben des letzteren in der Gleitrichtung (A) des Riegels ausgebildet ist.

2. Befestigungsvorrichtung nach Anspruch 1, dadurch gekennzeichnet, daß das Verriegelungselement wenigstens eine federnde Lamelle (76) umfaßt, welche am Schließteil über eines ihrer Enden (78) befestigt ist und einen gekrümmten Abschnitt (82) mit einem zu demjenigen der Raste (50) komplementären Profil aufweist, dessen Konvexität letzterer zugekehrt ist.

3. Befestigungsvorrichtung nach einem der Ansprüche 1 und 2, dadurch gekennzeichnet, daß der Riegel (22) einen Verbindungslappen (46) aufweist, welcher von der Oberseite (48) der Fußplatte (42) vertikal vorspringt, und daß das Schließteil (24) einen entsprechenden Schlitz (72) aufweist, welcher den Durchtritt des Verbindungslappens (46) beim Instellungbringen gestattet.

4. Befestigungsvorrichtung nach irgendeinem der Ansprüche 1 bis 3, dadurch gekennzeichnet, daß der Riegel (22) am Kühler (10) und das Schließteil (24) an der Karosserie (12) des Fahrzeugs befestigt ist.

5. Befestigungsvorrichtung nach Anspruch 4, dadurch gekennzeichnet, daß das Schließteil (24) an der Karosserie (12) mit Zwischenlage von Schwingungsdämgfungsmitteln (84) befestigt ist.

6. Befestigungsvorrichtung nach irgendeinem der Ansprüche 1 bis 5, dadurch gekennzeichnet, daß sie zwei Paare von Riegeln (22), die jeweils an zwei entgegengesetzten Seitenflächen des Kühlers befestigt sind, und zwei entsprechende Paare von Schließteilen (24) aufweist.

## Claims

1. Device for attaching a radiator (10) to the body (12) of a motor vehicle, comprising attachment means which connect two opposite ends (20, 26) of the radiator to the said body, at least one of these attachment means comprising a bolt (22), **characterised in that** the bolt (22) comprises a flat flange (42), a main face (54) and two guiding side faces (56, 58) of which are received, in a sliding manner in a direction (A) perpendicular to the plane of the radiator, in a housing of a catch (24) comprising complementary surfaces (60, 64, 66) for guiding the bolt, and in that the said attachment means comprises an elastically deformably locking element (76) which is received in a notch (50) formed in a face (48) of the flat flange (42) opposite the said main face (54), so as to enable the radiator to be positioned and attached by the translational movement of the said radiator in the sliding direction (A) of the bolt.

2. Attachment device according to claim 1, **characterised in that** the locking element comprises an elastic blade (76) attached to the catch by one of its ends (78) and comprising a curved portion (82) with a profile which complements that of the notch (50) and the convexity of which is oriented in the direction of this notch.

3. Attachment device according to one of claims 1 or 2, **characterised in that** the bolt (22) comprise a connection lug (46) projecting vertically form the upper face (48) of the flange (42) and in that the catch (24) comprises a corresponding slot (72) enabling the connection lug (46) to pass through during positioning.

4. Attachement device according to any one of claims 1 to 3, **characterised in that** the bolt (21) is attached to the radiator (10) and the catch (24) is attached to the body (12) of the vehicle.

5. Attachment device according to claim 4, **characterised in that** the catch (24) is attached to the body (12) with the interposition of means (84) for absorbing vibrations.

6. Attachment device according to any one of claims 1 to 5, **characterised in that** it comprises two pairs of bolts (22) attached, respectively, to two opposite side faces of the radiator and two corresponding pairs of catches (24).

FIG _1    FIG _2    FIG _3

EP 0 331 540 B1

EP 0 331 540 B1

FIG.4

FIG.5

FIG.6

EP 0 331 540 B1

FIG_7

FIG_8

FIG_9

FIG_10

FIG.11